(19) Europäisches Patentamt
European Patent Office
Office européen des brevets

(11) Veröffentlichungsnummer : **0 124 700**
**B1**

(12) # EUROPÄISCHE PATENTSCHRIFT

(45) Veröffentlichungstag der Patentschrift : **30.07.86**

(51) Int. Cl.[4] : **C 08 L 27/06**

(21) Anmeldenummer : **84102213.0**

(22) Anmeldetag : **02.03.84**

(54) **Transparente schlagzähe Formmassen auf der Basis von Polyvinylchlorid.**

(30) Priorität : **04.05.83 DE 3316224**

(43) Veröffentlichungstag der Anmeldung : **14.11.84 Patentblatt 84/46**

(45) Bekanntmachung des Hinweises auf die Patenterteilung : **30.07.86 Patentblatt 86/31**

(84) Benannte Vertragsstaaten : **BE CH DE FR GB IT LI NL SE**

(56) Entgegenhaltungen :
**EP-A- 0 093 854**
**GB-A- 2 032 938**

(73) Patentinhaber : **HÜLS AKTIENGESELLSCHAFT**
**Patentabteilung / PB 15 - Postfach 13 20**
**D-4370 Marl 1 (DE)**

(72) Erfinder : **Stützel, Bernhard, Dr.**
**Stargarder Strasse 32**
**D-4370 Marl (DE)**
Erfinder : **Küpper, Friedrich-Wilhelm, Dr.**
**Oderbruchstrasse 27**
**D-4370 Marl (DE)**
Erfinder : **Oberholz, Alfred, Dr.**
**Lipper Weg 197**
**D-4370 Marl (DE)**
Erfinder : **Wieland, Alfred, Dr.**
**Uckermarkstrasse 14**
**D-4370 Marl (DE)**

**EP 0 124 700 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der vorliegenden Erfindung sind schlagfeste transparente Formmassen auf der Basis von Polyvinylchlorid oder von zu 80 Gewichtsprozent aus Vinylchlorid-Einheiten bestehenden Mischpolymerisaten.

Es ist bekannt, daß die Schlagfestigkeit von Polyvinylchlorid verbessert werden kann, wenn man die Polymerisation des Vinylchlorids in Gegenwart eines Kautschuks ausführt oder wenn man Polyvinylchlorid mit Kautschukanteilen abmischt. Die erhaltenen Produkte sind im allgemeinen opak.

Formmassen aus modifiziertem Polyvinylchlorid, die Schlagzähigkeit und dennoch eine gewisse Transparenz aufweisen, sind in der Literatur aber auch bereits beschrieben worden.

So werden in der DE-B 2 013 020 transparente Pfropfmischpolymerisate beschrieben, zu deren Herstellung zunächst eine Monomerenmischung aus Styrol oder α-Methylstyrol in Gegenwart von vernetzend wirkenden Comonomeren und von Acryl- und Methacrylsäurenitril oder von Acryl- und Methacrylsäureester auf ein Butyl- oder 2-Ethylhexylacrylat-Polymerisat pfropfpolymerisiert wird und anschließend in Gegenwart des so entstandenen Pfropfpolymeren die Polymerisation des Vinylchlorids in Suspension erfolgt. Abgesehen davon, daß die beschriebene Verfahrensweise zur Herstellung der kautschukelastischen Phase durch die Vielzahl der Schritte und der Komponenten aufwendig ist, sind die in den Beispielen ausgewiesenen Kerbschlagzähigkeitswerte vergleichsweise niedrig.

Transparente schlagzähe Polyvinylchlorid-Formmassen werden auch in der DE-C 26 21 522 beschrieben. Diese Formmassen bestehen aus 3 Komponenten, nämlich einem Vinylchloridhomo- oder Copolymeren, einem Pfropfcopolymeren, bei dem auf einen Butadienkautschuk Methylmethacrylat und Styrol aufzupfropfen sind, und schließlich einem Copolymeren aus α-Methylstyrol, Methylmethacrylat, Acrylnitril und gegebenenfalls einem weiteren copolymerisierbaren Monomeren. Zum einen handelt es sich hier um ein aufwendiges Mehrstufenverfahren, bei dem nach Angaben des Anmelders die Reihenfolge der Zugabe der zahlreichen Komponenten schon bei der Herstellung des Kautschukanteils außerordentlich kritisch ist, zum anderen wird eine Vielzahl von Komponenten eingesetzt und schließlich sind die erhaltenen Formmassen aufgrund des Butadienanteils nicht witterungsstabil (vgl. DE-B 2 013 020, Spalte 1, Zeile 60 ff.).

Nicht mit diesem Nachteil der mangelnden Witterungsstabilität behaftet sind Formmassen, bei denen zur Erhöhung der Schlagfestigkeit des Polyvinylchlorids chloriertes Polyethylen zugesetzt wird, wie es z. B. in der DE-C 2 456 278 beschrieben wird. Nachteilig sind hier die engen Grenzen des Chlorgehaltes (38 bis 42 %), die verfahrenstechnisch nur schwierig einzuhalten sind ; hinzu kommt, daß nur kleine Kerbschlagzähigkeiten zu erreichen sind. So werden z. B. bei Zusatz von 10 Gewichtsprozent des speziellen chlorierten Polyethylens nur Kerbschlagzähgikeiten von 7 bis 8 erreicht.

Angesichts der geschilderten Nachteile des Standes der Technik bestand die Aufgabe der Erfindung darin, transparente und witterungsstabile Formmassen mit verbesserter Schlagfestigkeit zur Verfügung zu stellen, zu deren Herstellung nur ein vergleichsweise geringer Aufwand notwendig ist.

Überraschenderweise wurde nun gefunden, daß dieses Ziel erreicht wird, wenn transparente schlagzähe Formmassen auf der Basis von Polyvinylchlorid oder von zumindest zu 80 Gewichtsprozent aus Vinylchlorid-Einheiten bestehenden Mischpolymerisaten, als schlagzäh machende Komponente Homo- und Copolymere von Monomeren der folgenden Formel

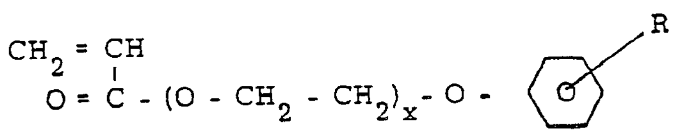

in der x Werte von 1 bis 4 annehmen und R = H, $CH_3$ und Cl bedeuten kann, wobei der Unterschied der Brechungsindices $n_D^{20}$ (bei 20 °C, gemessen mit der Na-D-Linie) zwischen Basispolymer und schlagzähmachender Komponente ± 0,01 ist, enthalten.

Bevorzugt ist die Verwendung von Polymerisaten der Formel

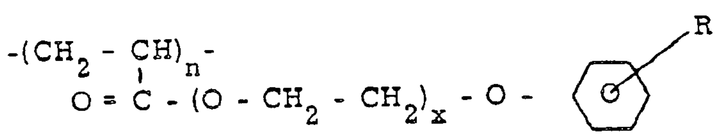

in der x Werte von 1 bis 3 annehmen und R = H, $CH_3$ und Cl bedeuten kann, während n für eine Zahl von 50 bis 50 000 steht, als schlagzäht machende Komponente zur Herstellung von transparenten schlagzähen Formmassen auf der Basis von Polyvinylchlorid oder zumindest 80 Gewichtsprozent aus Vinylchlorid-Einheiten bestehenden Mischpolymerisaten.

Zweckmäßigerweise enthalten die Formmassen die schlagzäh machende Komponente in Mengen von 3 bis 30, vorzugsweise von 6 bis 15, insbesondere von 8 bis 12 Gewichtsprozent, bezogen auf die

Mischung aus Polyvinylchlorid bzw. Vinylchloridmischpolymerisat und schlagzäh machender Komponente.

Vorzugsweise ist ferner der Unterschied der Brechungsindices $n_D^{20}$ (bei 20 °C, gemessen mit der Na-D-Linie) zwischen Basispolymer und schlagzäh machender Komponente ± 0,005, insbesondere auf ± 0,002, zu begrenzen.

Homo- und copolymere Acrylsäureester von Oxyethylaten des Phenols sind bevorzugt. Besonders bevorzugt sind solche mit x = 2 bzw. 3. Die schlagzäh machende Komponente sollte ein mittleres Molgewicht von $M_W = 5 \times 10^4$ bis $10^7$ aufweisen und kann 0 bis 30 Gewichtsprozent, vorzugsweise 0 bis 10 Gewichtsprozent, von Acrylestern aliphatischer unverzweigter oder — bei mehr als 6 C-Atomen — aliphatischer endständig verzweigter Alkohole mit 4 bis 10 C-Atomen als einpolymerisierte Comonomere enthalten.

Die schlagzäh machende Komponente kann auch in Gegenwart von 0,1 bis 2,0 Gewichtsprozent, vorzugsweise 0,5 bis 1,0 Gewichtsprozent, vernetzend wirkender Verbindungen hergestellt worden sein oder vor ihrer Einarbeitung mit vernetzend wirkenden Verbindungen umgesetzt werden. Als Vernetzer können beispielsweise Diallylphthalat, Maleinsäurediallylester und Divinylbenzol dienen.

Die Polymerisation des Vinylchlorids kann in üblicher Weise vor sich gehen. Es können dabei beliebig die Verfahren der Masse-, Emulsions- oder Suspensionspolymerisation angewendet werden, wie sie beispielsweise in der Monographie von Kainer, Polyvinylchlorid und Vinylchlorid-Mischpolymerisate, Springer-Verlag, Berlin/Heidelberg/New York (1965) auf den Seiten 1 bis 59 beschrieben sind.

Durch die Verwendung der schlagfestmachenden Polymeren aus Acrylestern von Oxethylaten des Phenols bzw. substituierter Phenole werden die erfindungsgemäßen Polyvinylchlorid-Formmassen mit guter Transparenz und teilweise erheblich verbesserten Kerbschlagzähigkeiten auf einfachere Weise erhalten als nach den Verfahren des Standes der Technik. Letztere erfordern den Einsatz von Polymeren, die aus mehreren Komponenten aufgebaut sind und entsprechend nur unter erheblichem Aufwand und mit Schwierigkeiten hergestellt werden können.

Die Monomeren zur Herstellung der erfindungsgemäß dem Polyvinylchlorid zuzusetzenden Weichkomponenten sind dagegen leicht und damit wirtschaftlich aus den durch Ethylenoxidanlagerung der entsprechenden Phenole zugänglichen Oxethylaten erhältlich, indem man letztere durch Direktveresterung oder Umesterung mit Acrylsäure bzw. deren Estern in die gewünschten Verbindungen überführt. Sowohl hinsichtlich der Oxethylierung von Phenolen als auch der Herstellung monomerer Acrylester sei auf die einschlägige Literatur verwiesen, aus der beispielsweise die Übersichtsartikel in M. J. Schick, « Nonionic Surfactant » Vol. I (1967) und in J. K. Haken, « Synthesis of Acrylic Esters by Transesterification » (1967), Noyes Development Co., erwähnt seien.

Zum Teil sind die Acrylatmonomeren und die daraus erhältlichen Polymeren bereits beschrieben. So wurden Phenoxyethylacrylat und Phenoxyethoxyethylacrylat bereits früher synthetisiert und auf verschiedene Weise polymerisiert (vgl. US-A 2 396 434, 2 458 888 sowie J. Org. Chem. 14 (1949) 1094). Die mögliche Eignung derartiger Polymerer als Weichkomponente von schlagfesten transparenten PVC-Formmassen wurde weder damals noch in der Zwischenzeit erkannt. Selbst in der DE-C 2 846 573, die ein Verfahren zur Herstellung heißhärtbarer Kunststoffmassen zum Ersatz von Polyvinylchlorid-Plastisolen beschreibt, wird der erfindungsgemäße Anwendungsbereich nicht erkannt. Stets war in der Vergangenheit der Anlaß für die Verwendung von 2-Phenoxy-(polyethoxy)-ethylacrylaten deren geringer Dampfdruck unter Verarbeitungsbedingungen der beanspruchten Massen oder der Wunsch, über die polaren Molekülbestandteile anwendungstechnische Eigenschaften (wie z. B. die Anfärbbarkeit) gezielt zu beeinflussen.

Die als schlagzäh machende Komponente erfindungsgemäß einzusetzenden Polymeren lassen sich durch übliche Polymerisation in Masse, in Lösung oder in Emulsion aus den o. a. Monomeren herstellen in analoger Weise, wie dies in der Monographie « Acrylic Resins » von Horn, Reinhold Publishing Corp. (1960), Seiten 26 bis 29, oder in Houben-Weyl, « Methoden der Organischen Chemie », 4. Auflage (1961), Band 14, Teil 1, Seite 1 010 ff., beschrieben ist.

Besonders zweckmäßig ist die Herstellung der Polymeren durch Emulsionspolymerisation.

Als Emulgatoren lassen sich die bekannten Typen einsetzen. Es kommen insbesondere ionogene infrage, z. B. Alkylsulfonate, wie Natriumstearylsulfonat, Natriumoleylsulfonat. Weiterhin kommen Alkylsulfate, wie Natriumlaurylsulfat, Natriumstearylsulfat und Natriumoleylsulfat, sowie Salze von Carbonsäuren, wie Natriumcaprinat, Natriumlaurat, Natriummyristat und Natriumpalmitat, infrage. Ebenso können die o. g. Verbindungsklassen mit statistischen Verteilungen der aliphatischen Kettenlängen von $C_{12}$-$C_{18}$ eingesetzt werden.

Auch Arylalkylsulfonate, z. B. das Na-Salz der p-n-Dodecylbenzolsulfonsäure kommen infrage ; auch Gemische von Emulgatoren können eingesetzt werden.

Die Konzentration der Emulgatoren beträgt 0,3 bis 3 Gewichtsprozent, vorzugsweise 0,5 bis 2,0 Gewichtsprozent, bezogen auf Monomeres.

Als Katalysatoren kommen die bei der Emulsionspolymerisation üblicherweise angewandten wasserlöslichen Verbindungen infrage, wie wasserlösliche Azoinitiatoren, z. B. 2,2'-Azobis-(2-amidinopropan)-dihydrochlorid oder ähnliche, in der Literatur (siehe z. B. Nuyken und Kerber, Makromol. Chem. *179* (1978), Seiten 2845 bis 2857) beschriebene Verbindungen, außerdem Persulfate, gegebenenfalls kombiniert mit einer reduzierenden Komponenten, wie wasserlösliches Bisulfit, Wasserstoffperoxid, kombiniert mit reduzierenden Komponenten, wie Bisulfit, Hydrazin oder Ascorbinsäure ; auch können Kombinationen aus den genannten Katalysatoren eingesetzt werden, gegebenenfalls in Gegenwart aktivierender Komponenten, wie z. B. Kupfersalzen. Es werden die üblichen Konzentrationen angewendet.

Von den aufgeführten Initiatoren sind wasserlösliche Azoinitiatoren bevorzugt. Besonders bevorzugt wird 2,2'-Azobis-(2-amidinopropan)-dihydrochlorid.

Die Temperatur sollte bei den Emulsionspolymerisaten 40 bis 90 °C, vorzugsweise 50 bis 70 °C, betragen. Die für einzelne der angeführten Initiatoren optimale Temperatur ist leicht aus den literaturbekannten Initiatorzerfallsdaten zu ermitteln. Gleiches gilt für das Phasenverhältnis Monomer/Wasser, das sich im Bereich 1/10 bis 1/1 bewegen sollte.

Bei der Lösungspolymerisation können z. B. folgende Lösungsmittel eingesetzt werden : aliphatisch gesättigte Carbonsäureester, wie Ethylacetat, Butylacetat o. ä., aromatische Kohlenwasserstoffe, wie Toluol, Xylol, Ether, wie Tetrahydrofuran, Diethylester o. ä.

Die Menge sollte so gewählt werden, daß eine einwandfreie Durchmischung und andererseits eine problemlose Abführung der Polymerisationswärme möglich ist.

Als Katalysatoren bei der Lösungspolymerisation kommen z. B. infrage : oganische Peroxide, wie Benzylperoxid, Lauroylperoxid o. ä. ; Percarbonate, wie Isopropylpercarbonat, Cyclohexylpercarbonat ; Azoverbindungen, wie Azodiisobutyronitril etc. Azoinitiatoren sind bevorzugt. Die Polymerisationstemperatur sollte zwischen 30 und 110 °C liegen.

Auch die Herstellung der Mischpolymerisate mit bis zu 30 Gewichtsprozent an aliphatischen Acrylsäureestern mit 4 bis 10 Kohlenstoffatomen geht nach den oben beschriebenen Methoden vor sich. Als aliphatische Acrylsäureester mit 4 bis 10 Kohlenstoffatomen im Alkoholteil kommen infrage : n-Butylacrylat, n-Hexylacrylat, Isohexylacrylat, n-Octylacrylat, 2-Ethylhexylacrylat, n-Decylacrylat, Isodecylacrylat. Bevorzugt sind n-Butylacrylat und 2-Ethylhexylacrylat.

Das Einbringen der schlagzäh machenden Komponente in das Polyvinylchlorid kann durch alle bekannten Verfahren des Modifizierens durchgeführt werden, nämlich durch Pfropfpolymerisation von Vinylchlorid auf die schlagzäh machende Komponente oder durch beliebige Art des Mischens von Polyvinylchlorid mit der schlagzäh machenden Komponente, z. B. durch Mischen im festen Zustand auf einem Walzenmischer, einem Banbury-Mischer, einem Plastographen, einem Compoundier-Extruder oder dergleichen. Gegebenenfalls können die Komponenten auch mittels eines Rippenmischers oder eines Henschel-Mischers vorgemischt werden. Das Polyvinylchlorid und die schlagzäh machende Komponente können auch miteinander in Latexform gemischt werden. Man kann den Latex dann auf übliche Weise trocknen, z. B. durch Verdüsen. Bevorzugt ist die Pfropfpolymerisation.

Dem mit der schlagzäh machenden Komponente vermischten Polyvinylchlorid können übliche Zusätze, wie Stabilisatoren, Weichmacher, Gleitmittel, Pigmente, Füllstoffe und dergleiche zugegeben werden. Diese Zusätze kann man zweckmäßigerweise auch gleich beim Vermischen des Polyvinylchlorids mit der schlagfest machenden Komponente mit einmischen. Nähere Einzelheiten sind der einschlägigen Fachliteratur, beispielsweise der Monographie Gächter-Müller, « Handbuch der Kunststoff-Additive », Hanser-Verlag, 1979, zu entnehmen.

Bei der Wertung der Transparenz ist zu bedenken, daß Polyvinylchlorid aufgrund seiner Neigung zur Zersetzung beim Verarbeitungsprozeß, verglichen mit anderen Thermoplasten, in besonderer Weise stabilisiert werden muß. Hierdurch wird die Transparenz, verglichen mit anderen Thermoplasten, verschlechtert. Masse-Polyvinylchlorid als reinstes Polyvinylchlorid sollte die bei diesen Thermoplasten größmögliche Transparenz zeigen. Wenn daher ein schlagfestes, d. h. modifiziertes Polyvinylchlorid Transparenzen aufweist, die nahe an die Transparenz des reinen Masse-Polyvinylchlorid heranreichen, so sollten diese Transparenzen annähernd das auf diesem Gebiet höchstmögliche darstellen.

Dabei muß weiterhin in Betracht gezogen werden, daß die Transparenz, auch bei Masse-Polyvinylchlorid, von der jeweiligen Rezeptur, d. h. den (für die Verarbeitung unerläßlichen) Zusätzen an Gleitmittel, Stabilisatoren und dergleichen abhängig ist und nur für absolut gleiche Rezepturen und natürlich gleiche Schichtdicken Vergleiche gezogen werden dürfen.

Für die im nachfolgenden zur Erläuterung angeführten Beispiele wurde folgende Konfektionierungsrezeptur verwendet :

| | | |
|---|---|---|
| Polyvinylchlorid (bzw. modifiziertes Polyvinylchlorid) | 100 | Gewichtsteile |
| Ba-Cd-Stabilisator | 2,5 | Gewichtsteile |
| Polyethylen-Gleitmittel | 0,15 | Gewichtsteile |
| Polymethylmethacrylat-Verarbeitungshilfsmittel | 1,2 | Gewichtsteile |
| Flüssiger partieller Fettsäureester des Glycerins | 0,4 | Gewichtsteile |
| Festes neutrales Glycerin-Esterwachs | 0,4 | Gewichtsteile |

Zur Herstellung der Prüfkörper wurden zunächst Walzfelle bei 185 °C Walzentemperatur und 5 Minuten Walzdauer hergestellt. Nacht Verpressen zu 2 bzw. 4 mm dicken Platten wurden die in Tabelle 1 angegebenen Transmissions-, Haze- und Kerbschlagzähigkeitsmessungen vorgenommen.

Wie die nachfolgenden Beispiele ausweisen, zeigen die erfindungsgemäßen Mischungen eine hohe Schlagzähigkeit bei hoher Transparenz.

Die Erfindung wird durch die nachfolgenden Beispiele weiter erläutert. (VE-Wasser bedeutet vollentsalztes Wasser).

A) Herstellung des Poly-Acrylsäureesters

Beispiel 1

In einem 2 l-Stahlautoklaven mit Rührer, Temperierung sowie Einrichtungen zum Evakuieren, Begasen mit $N_2$, Einfüllen und Zudosieren von Reaktanten (Hersteller z. B. Fa. SFS/Buechi, Uster, Schweiz) werden vorgelegt

20 Teile (250 g) Phenoxyethoxyethylacrylat
76 Teile (950 g) VE-Wasser
0,24 Teile (3 g) Natriumdodecylsulfonat

In die Vorlage der Dosiereinrichtung werden gegeben

0,04 Teile (0,5 g) 2,2'-Azobis-(2-amidinopropan)-hydrochlorid
4 Teile (50 g) VE-Wasser

Nach Entgasen und Spülen mit $N_2$ wird der Reaktorinhalt unter 2 bar $N_2$-Überdruck auf 60 °C aufgeheizt. Während des Aufheizens werden 5 ml der Initiator-Lösung zugegeben, der Rest wird gleichmäßig im Verlauf von 120 Minuten nach dem Ende des Aufheizens zudosiert und die Reaktionstemperatur auf 60 °C gehalten. Nach weiteren 30 Minuten ist die Reaktion beendet. Man läßt abkühlen und erhält einen weißen, stabilen Acrylat-Latex mit 19,6 Gewichtsprozent Feststoff, d. h. der Umsatz beträgt ca. 98 Gewichtsprozent. Der Gelgehalt in Tetrahydrofuran liegt zwischen 50 und 65 Gewichtsprozent.

Beispiel 1a

Beispiel 1 wird wiederholt, wobei im Reaktor zusätzlich 0,2 Teile (2,5 g) Diallylphthalat vorgelegt werden. Feststoff 19,7 Gewichtsprozent entsprechend ca. 98 Gewichtsprozent Umsatz. Der Gelgehalt in Tetrahydrofuran liegt zwischen 70 und 85 Gewichtsprozent.

Beispiel 2

In der in Beispiel 1 beschriebenen Apparatur werden vorgelegt

20 Teile (250 g) Phenoxyethoxyethylacrylat
76 Teile (950 g) VE-Wasser
0,24 Teile (3 g) Natriumlaurat

In zwei Vorlagen der Dosiereinrichtung werden gegeben

Vorlage 1
0,002 Teile (0,025 g) Ascorbinsäure gelöst in
2 Teilen (25 g) VE-Wasser

Vorlage 2
0,002 Teile (0,025 g) $H_2O_2$ gelöst in
2 Teilen (25 g) VE-Wasser

Nach Entgasen und Spülen mit $N_2$ wird der Reaktorinhalt unter 2 bar $N_2$-Überdruck auf 60 °C aufgeheizt. Während des Aufheizens werden jeweils 2 ml der Initiatorkomponenten aus Vorlage 1 und Vorlage 2 zugegeben, der Rest wird gleichmäßig im Verlauf von 120 Minuten nach dem Ende des Aufheizens zudosiert und die Reaktionstemperatur auf 60 °C gehalten. Nach weiteren 30 Minuten ist die Reaktion beendet. Man läßt abkühlen und erhält einen weißen, stabilen Acrylat-Latex mit 19,6 Gewichtsprozent Feststoff, d. h. der Umsatz beträgt ca. 98 Gewichtsprozent. Der Gelgehalt in Tetrahydrofuran liegt zwischen 50 und 65 Gewichtsprozent.

Beispiel 2a

Beispiel 2 wird wiederholt, wobei im Reaktor zusätzlich 0,2 Teile (2,5 g) Diallylphthalat vorgelegt werden. Feststoff 19,8 Gewichtsprozent entsprechend ca. 98 Gewichtsprozent Umsatz. Der Gelgehalt in Tetrahydrofuran liegt zwischen 70 und 85 Gewichtsprozent.

Beispiel 3

Beispiel 1 wird wiederholt, wobei statt Phenoxyethoxyethylacrylat 20 Teile (250 g) Phenoxyethoxyethoxyethylacrylat eingesetzt werden. Umsatz und Gelgehalt entsprechen den für Beispiel 1 angegebenen Werten.

Beispiel 3a

Beispiel 1 wird wiederholt, wobei statt Phenoxyethoxyethylacrylat 20 Teile (250 g) Phenoxyethoxyethoxyethylacrylat eingesetzt werden und zusätzlich im Reaktor 0,2 Teile (2,5 g) Diallylphthalat vorgelegt werden. Umsatz und Gelgehalt entsprechen den für Beispiel 1a angegebenen Werten.

Beispiel 4

Beispiel 1 wird wiederholt, wobei statt 20 Teilen Phenoxyethoxyethylacrylat 17 Teile (212,5 g) Phenoxyethylacrylat und 3 Teile (37,5 g) Butylacrylat vorgelegt werden. In die Dosiereinrichtungsvorlage werden statt 0,04 Teile (0,5 g) 2,2'-Azobis-(2-amidinopropan)-hydrochlorid 0,04 Teile (0,5 g) Kaliumpersulfat gegeben. Umsatz und Gelgehalt entsprechen den für Beispiel 1 angegebenen Werten.

Beispiel 4a

Beispiel 1 wird wiederholt, wobei statt 20 Teilen Phenoxyethoxyethylacrylat 17 Teile (212,5 g) Phenoxyethylacrylat und 3 Teile (37,5 g) Butylacrylat sowie zusätzlich 0,2 Teile (2,5 g) Diallylphthalat vorgelegt werden. In die Dosiereinrichtungsvorlage werden statt 0,04 Teilen (0,5 g) 2,2'-Azobis-(2-amidinopropan)-hydrochlorid 0,04 Teile (0,5 g) Kaliumpersulfat gegeben. Umsatz und Gelgehalt entsprechen den für Beispiel 1a angegebenen Werten.

Beispiel 5

Beispiel 1 wird wiederholt, wobei statt 20 Teilen Phenoxyethoxyethylacrylat eine Mischung aus 18 Teilen (225 g) Phenoxyethoxyethylacrylat und 2 Teilen (25 g) Butylacrylat vorgelegt werden. Umsatz und Gelgehalt entsprechen den unter Beispiel 1 angegebenen Werten.

Beispiel 5a

Beispiel 1 wird wiederholt, wobei statt 20 Teilen Phenoxyethoxyethylacrylat eine Mischung aus 18 Teilen (225 g) Phenoxyethoxyethylacrylat und 2 Teilen (25 g) Butylacrylat sowie 0,2 Teilen (2,5 g) Diallylphthalat vorgelegt werden. Umsatz und Gelgehalt entsprechen den unter Beispiel 1a angegebenen Werten.

B) Herstellung der Mischung aus Polyvinylchlorid und Polyacrylsäureester

a) Pfropfpolymerisation von Vinylchlorid mit Polyacrylsäureester

Beispiele 6 bis 15

In einem 2 l-Stahlautoklaven der unter A) beschriebenen Bauart werden vorgelegt

50 Teile (200 g) Polyacrylat-Latex, hergestellt nach den Beispielen 1, 1a, 2, 2a, 3, 3a, 4, 4a, 5 und 5a (dies entspricht jeweils ca. 40 g festem Polymeren und 160 g Wasser)
160 Teile (640 g) VE-Wasser
0,03 Teile (0,12 g) Sorbitmonolaurat
0,08 Teile (0,32 g) Lauroylperoxid
0,06 Teile (0,24 g) Dicetylperoxodicarbonat

Nachdem das vorgelegte Gemisch entgast und mit Stickstoff gespült ist, werden unter Rühren bei 200 bis 300 U/min 90 Teile (360 g) Vinylchlorid in den Autoklaven eingedrückt und anschließend die Rührerdrehzahl auf 350 U/min erhöht.
Dann werden

0,4 Teile (1,6 g) Hydroxyethylcellulose gelöst in
50 Teilen (200 g) VE-Wasser

zugegeben und 2 bar $N_2$-Druck aufgegeben.

Der Reaktorinhalt wird auf 60 °C aufgeheizt und bei dieser Temperature bis zum Druckabfall um 3 bar innerhalb von ca. 6 Stunden auspolymerisiert.

Nach Erkalten, Rest-VC-Entgasung, Waschen und Trocknen erhält man rieselfähige Pulver, deren mittlere Korndurchmesser bei 100 bis 150 µm liegen.

Ermittelte Werte für Schlagzähigkeit und Transparenz sind Tabelle 1 zu entnehmen. Es wurde die vorher angegebene Stabilisierungsrezeptur angewendet (Seite 9).

Beispiel 16 bis 23

In einem 2 l-Stahlautoklaven der unter A) beschriebenen Bauart werden vorgelegt

37,5 Teile (150 g) Polyacrylat-Latex, hergestellt nach den Beispielen 1, 1a, 2, 2a, 3, 3a, 5 und 5a (dies entspricht jeweils ca. 30 g festem Polymeren und 120 g Wasser)
160 Teile (640 g) VE-Wasser
0,03 Teile (0,12 g) Sorbitmonolaurat
0,08 Teile (0,32 g) Lauroylperoxid
0,06 Teile (0,24 g) Dicetylperoxodicarbonat

Nachdem das vorgelegte Gemisch entgast und mit Stickstoff gespült ist, werden unter Rühren bei 200 bis 300 U/min 92,5 Teile (370 g) Vinylchlorid in den Autoklaven eingedrückt und anschließend die Rührdrehzahl auf 350 U/min erhöht.

Dann werden

0,4 Teile (1,6 g) Hydroxyethylcellulose gelöst in
50 Teilen (200 g) VE-Wasser

zugegeben und 2 bar $N_2$-Druck aufgegeben. Der Reaktorinhalt wird auf 60 °C aufgeheizt und bei dieser Temperatur bis zum Druckabfall um 3 bar innerhalb von ca. 6 Stunden auspolymerisiert. Nach Erkalten, Rest-VC-Entgasung, Waschen und Trocknen erhält man rieselfähige Pulver, deren mittlere Korndurchmesser bei 100 bis 150 µm liegen.

Ermittelte Werte für Schlagzähigkeit und Transparenz sind Tabelle 1 zu entnehmen. Es wurde die vorher angegebene Stabilisierungsrezeptur angewendet (Seite 9).

b) Mischen von PA und Emulsions-Polyvinylchlorid (E-PVC)

Beispiel 24

100 Teile (5 000 g) E-PVC-Latex mit 45 % PVC (Herstellung z. B. nach DE-A-25 31 780) und
22,5 Teile (1 125 g) PA-Latex (mit 20 Gewichtsprozent Polymeranteil, Herstellung nach Beispiel 1a)

werden zusammen in einer Nubilosa-Laborsprühtrocknungsanlage sprühgetrocknet. Man erhält ein begrenzt rieselfähiges Pulver. Ermittelte Werte für Schlagzähigkeit und Transparenz sind Tabelle 1 zu entnehmen. Es wurde die auf Seite 9 angegebene Stabilisierungsrezeptur angewendet.

(Siehe Tabelle 1 Seite 8 f.)

Tabelle 1

| Modifiziertes Polyvinylchlorid | Transmission, Schichtdicke 2 mm, Wellenlänge 600 nm | Haze H (Kontrasttrübung) nach ASTM D 1003, Schichtdicke 2 mm, Wellenlänge 600 nm in % | Kerbschlagzähigkeit in kj/m², 4 mm Preßplatten nach DIN 53 453 | Modifierkomponente in % |
|---|---|---|---|---|
| Masse-Polyvinylchlorid nach DE-A 15 20 595 (Standardprobe) | 81 | 0,92 | 2 | 0 |
| DE-B 20 13 020 | - | - | 6 | 10 |
| DE-C 24 56 278 | 73 | 24,4 | 5 | 8 |
| Erfindungsgemäß | | | | |
| Beispiel 6 | 82 | 8,8 | 21 | 10 |
| Beispiel 7 | 82 | 8,6 | 23 | 10 |
| Beispiel 8 | 79 | 9,3 | 20 | 10 |
| Beispiel 9 | 79 | 9,5 | 22 | 10 |
| Beispiel 10 | 78 | 13,6 | 24 | 10 |
| Beispiel 11 | 77 | 14,2 | 27 | 10 |
| Beispiel 12 | 77 | 15,0 | 14 | 10 |
| Beispiel 13 | 78 | 13,7 | 15 | 10 |
| Beispiel 14 | 77 | 11,9 | 23 | 10 |
| Beispiel 15 | 76 | 10,4 | 24 | 10 |
| Beispiel 16 | 84 | 8,0 | 14 | 7,5 |
| Beispiel 17 | 84 | 8,2 | 15 | 7,5 |
| Beispiel 18 | 80 | 8,7 | 13 | 7,5 |
| Beispiel 19 | 81 | 8,9 | 16 | 7,5 |
| Beispiel 20 | 77 | 14,1 | 17 | 7,5 |
| Beispiel 21 | 77 | 15,6 | 17 | 7,5 |
| Beispiel 22 | 78 | 11,3 | 14 | 7,5 |
| Beispiel 23 | 78 | 10,9 | 16 | 7,5 |
| Beispiel 24 | 78 | 16,0 | 22 | 10 |

**Patentansprüche**

1. Transparente schlagzähe Formmassen auf der Basis von Polyvinylchlorid oder von zumindest zu 80 Gewichtsprozent aus Vinylchlorid-Einheiten bestehenden Mischpolymerisaten, enthaltend als schlagzäh machende Komponente Homo- und Copolymere von Monomeren der folgenden Formel

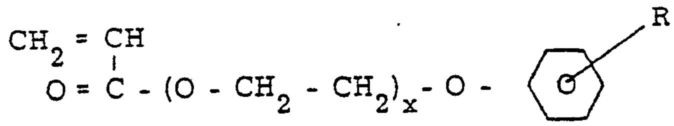

in der x Werte von 1 bis 4 annehmen und R = H, $CH_3$ und Cl bedeuten kann, wobei der Unterschied der Brechungsindices $n_D^{20}$ (bei 20 °C, gemessen mit der Na-D-Linie) zwischen Basispolymer und schlagzäh machender Komponente maximal ± 0,01 ist, und gegebenenfalls von anderen Acrylsäureestern als Comonomere.

2. Transparente schlagzähe Formmassen nach Anspruch 1, dadurch gekennzeichnet, daß sie die schlagzäh machende Komponente in Mengen von 3 bis 30 Gewichtsprozent, bezogen auf die Mischung aus Polyvinylchlorid bzw. Vinylchloridmischpolymerisat und schlagzäh machende Komponente, enthalten.

3. Transparente schlagzähe Formmassen nach den Ansprüchen 1 und 2, dadurch gekennzeichnet, daß sie die schlagzäh machende Komponente in Mengen von 6 bis 15 Gewichtsprozent enthält.

4. Transparente schlagzähe Formmassen nach den Ansprüchen 1 bis 3, dadurch gekennzeichnet, daß sie die schlagzäh machende Komponente in Mengen von 8 bis 12 Gewichtsprozent enthalten.

5. Transparente schlagzähe Formmassen nach den Ansprüchen 1 bis 4, dadurch gekennzeichnet, daß die schlagzäh machende Komponente 0 bis 30 Gewichtsprozent aliphatische Acrylsäureester mit 4 bis 10 C-Atomen im Alkoholrest enthält.

6. Transparente schlagzähe Formmassen nach den Ansprüchen 1 bis 5, dadurch gekennzeichnet, daß der Unterschied der Brechungsindicex $n_D^{20}$ (bei 20 °C, gemessen mit der Na-D-Linie) zwischen Basispolymer und schlagzäh machender Komponente maximal ± 0,005 ist.

7. Transparente schlagzähe Formmassen nach den Ansprüchen 1 bis 6, dadurch gekennzeichnet, daß der Unterschied der Brechungsindices $n_D^{20}$ (bei 20 °C, gemessen mit der Na-D-Linie) zwischen Basispolymer und schlagzäh machender Komponente maximal ± 0,002 beträgt.

8. Transparente schlagzähe Formmassen nach den Ansprüchen 1 bis 7, dadurch gekennzeichnet, daß in der angegebenen Formel x gleich 2 oder 3 und R gleich H sein soll.

9. Verwendung von Polymerisaten der Formel

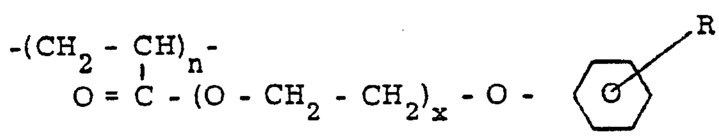

in der x Werte von 1 bis 3 annehmen und R = H, $CH_3$ und Cl bedeuten kann, während n für eine Zahl von 50 bis 50 000 steht, als schlagzäh machende Komponente zur Herstellung von transparenten schlagzähen Formmassen auf der Basis von Polyvinylchlorid oder zumindest 80 Gewichtsprozent aus Vinylchlorid-Einheiten bestehenden Mischpolymerisaten.

**Claims**

1. A transparent high-impact-strength moulding material based on polyvinyl chloride or on a copolymer consisting of at least 80 % by weight of vinyl chloride units, which moulding material contains, as component which imparts impact strength, a homopolymer or copolymer of a monomer of the formula

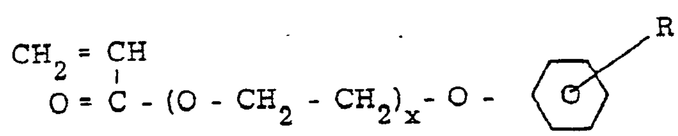

in which x can assume values from 1 to 4 and R can denote H, $CH_3$ or Cl, optionally with one or more other acrylic acid esters as comonomers, the difference in the refractive indices $N_D^{20}$ (at 20 °C, measured with the Na D-line) between the base polymer and the component which imparts impact strength being at most ± 0.01 %.

2. A transparent high-impact-strength moulding material according to claim 1, characterised in that the component which imparts impact strength is present in an amount of 3 to 30 % by weight, based on the mixture of polyvinyl chloride or vinyl chloride copolymer and component which imparts impact strength.

3. A transparent high-impact-strength moulding material according to claim 1 or 2, characterised in that the component which imparts impact strength is present in an amount of 6 to 15 % by weight.

4. A transparent high-impact-strength moulding material according to any of claims 1 to 3, characterised in that the component which imparts impact strength is present in an amount of 8 to 12 % by weight.

5. A transparent high-impact-strength moulding material according to any of claims 1 to 4, characterised in that the component which imparts impact strength contains 0 to 30 % by weight of one or more aliphatic esters of acrylic acid with 4 to 10 C atoms in the alcohol radical.

6. A transparent high-impact-strength moulding material according to any of claims 1 to 5, characterised in that the difference in the refractive indices $N_D^{20}$ (at 20 °C, measured with the Na D-line) between the base polymer and the component which imparts impact strength is at most ± 0.005.

7. A transparent high-impact-strength moulding material according to any of claims 1 to 6, characterised in that the difference in the refractive indices $N_D^{20}$ (at 20 °C, measured with the Na D-line) between the base polymer and the component which imparts impact strength is at most ± 0.002.

8. A transparent high-impact-strength moulding material according to any of claims 1 to 7, characterised in that in the stated formula x is 2 or 3 and R is H.

9. The use of a polymer of the formula

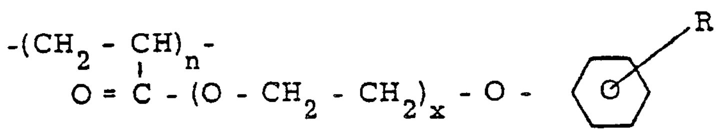

in which x can assume values of 1 to 3 and R can denote H, $CH_3$ and Cl while n represents a number from 50 to 50,000, as a component which imparts impact strength in the manufacture of transparent high-impact-strength moulding materials based on polyvinyl chloride or copolymers consisting of not less than 80 % by weight of vinyl chloride units.

**Revendications**

1. Matières à mouler transparentes résilientes à base de polychlorure de vinyle ou de produits de copolymérisation formés à raison d'au moins 80 % en poids d'unités chlorure de vinyle, contenant comme constituant communiquant de la résilience des homo- et copolymères de monomères de la formule suivante :

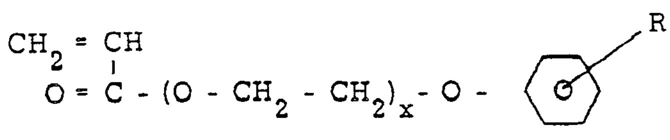

dans laquelle x peut prendre des valeurs de 1 à 4 et R peut représenter H, $CH_3$ et Cl, la différence des indices de réfraction $n_D^{20}$ (mesurée à 20 °C avec la ligne Na-D) entre polymère de base et constituant communiquant de la résilience étant au maximum de ± 0,01, et éventuellement d'autres esters d'acides acryliques comme comonomères.

2. Matières à mouler transparentes résilientes selon la revendication 1, caractérisées par le fait qu'elles contiennent le constituant communiquant de la résilience en quantités de 3 à 30 % en poids, relativement au mélange de polychlorure de vinyle ou de produit de copolymérisation de chlorure de vinyle et de constituant communiquant de la résilience.

3. Matières à mouler transparentes résilientes selon les revendications 1 et 2, caractérisées par le fait qu'elles contiennent le constituant communiquant de la résilience en quantités de 6 à 15 % en poids.

4. Matières à mouler transparentes résilientes selon les revendications 1 à 3, caractérisées par le fait qu'elles contiennent le constituant communiquant de la résilience en quantités de 8 à 12 % en poids.

5. Matières à mouler transparentes résilientes selon les revendications 1 à 4, caractérisées par le fait que le constituant communiquant de la résilience contient de 0 à 30 % en poids d'ester aliphatique d'acide acrylique renfermant de 4 à 10 atomes de carbone dans le radical alcoolique.

6. Matières à mouler transparentes résilientes selon les revendications 1 à 5, caractérisées par le fait que la différence des indices de réfraction $n_D^{20}$ (mesurée à 20 °C avec la raie D du sodium) entre polymère de base et constituant communiquant de la résilience, est au maximum de ± 0,005.

7. Matières à mouler transparentes résilientes selon les revendications 1 à 6, caractérisées par le fait que la différence des indices de réfraction $n_D^{20}$ (mesurée à 20 °C avec la raie D du sodium) entre polymère de base et constituant communiquant de la résilience, est au maximum de ± 0,002.

8. Matières à mouler transparentes résilientes selon les revendications 1 à 7, caractérisées par le fait que dans la formule indiquée, x doit être égal à 2 ou 3 et R représente de l'hydrogène.

9. L'utilisation de produits de polymérisation de la formule

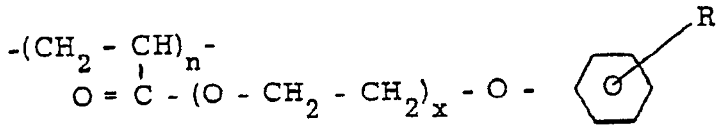

dans laquelle x peut prendre des valeurs de 1 à 3 et R peut représenter de l'hydrogène, un groupe méthyle et du chlore, tandis que n représente un nombre de 50 à 50 000, en tant que constituant communiquant de la résilience, pour la préparation de matières à mouler transparentes résilientes à base de polychlorure de vinyle ou de produits de copolymérisations formés d'au moins 80 % en poids d'unités chlorure de vinyle.